# FASCICULE DE BREVET EUROPEEN

(11) **EP 2 633 169 B1**
(45) Date de publication et mention de la délivrance du brevet: **20.08.2014**
(21) Numéro de dépôt: 11787711.8
(22) Date de dépôt: 17.10.2011
(51) Int. Cl.: F02C 9/28

(54) **PROCÉDÉ DE COMMANDE D'UNE TURBOMACHINE**
VERFAHREN ZUR STEUERUNG EINER TURBOMASCHINE
METHOD OF CONTROLLING A TURBOMACHINE

(30) Priorité: 26.10.2010 FR 1058768
(43) Date de publication de la demande: 04.09.2013
(73) Titulaire: Snecma, 75015 Paris (FR)
(72) Inventeur: GAULLY, Bruno, Robert, F-91630 Marolles En Hurepoix (FR); DJELASSI, Cedrik, F-91630 Marolles En Hurepoix (FR); MCGRATH, Darragh, F-75012 Paris (FR); ROUX, Jean-Michel, F-94220 Charenton Le Pont (FR)
(74) Mandataire: David, Alain
(86) Numéro de dépôt international: PCT/FR2011/052422
(87) Numéro de publication internationale: WO 2012/056144

(56) Documents cités:
- EP-A1- 0 616 118
- FR-A1- 2 681 377
- US-A1- 2003 115 883

## Description

### Arrière-plan de l'invention

L'invention concerne le domaine général de l'aéronautique. En particulier, l'invention se rapporte à un procédé de commande d'une turbomachine d'un moteur d'aéronef en cas d'ingestion d'eau ou de grêle par la turbomachine.

Typiquement, le fonctionnement d'une turbomachine est régulé par une unité électronique de commande, qui met en oeuvre une boucle de régulation principale pour asservir une combinaison de mesures réalisées sur le moteur (régime, EPR,...) à une consigne donnée fonction de la poussé souhaitée, par action sur le débit de carburant amené à la chambre de combustion. L'unité électronique de commande met également en oeuvre des boucles de régulation secondaires pour des équipements à géométrie variable de la turbomachine.

Par "équipement à géométrie variable", on entend ici un équipement dont la dimension, la forme, la position et/ou la vitesse est ou sont susceptible(s) d'être modifiée(s) en fonction d'événements détectés ou de paramètres définis, pour agir sur le fonctionnement de la turbomachine. Des exemples d'équipements à géométrie variable sont des vannes de décharge d'air du compresseur (à ouverture variable), des aubes fixes de compresseur à angle de calage variable, des aubes de turbine dont le jeu au sommet est variable, etc.

En particulier, il est connu de commander l'angle des aubes fixes de compresseur à angle de calage variable (VSV pour « *Variable Stator Vane* ») en fonction d'un régime réduit XN25R, lui-même déterminé en fonction du régime XN25 du corps haute pression et de la température T25 en entrée du compresseur de la turbomachine.

Or, en cas d'ingestion d'eau ou de grêle par la turbomachine, la température T25 mesurée par le capteur correspondant diminue, ce qui conduit à une augmentation du régime réduit XN25R et donc à une sur-ouverture des aubes. Une telle sur-ouverture peut conduire à un pompage du compresseur.

Pour éviter ces inconvénients, il est connu d'utiliser une sonde de température T25 présentant un séparateur inertiel protégeant la partie active de la sonde de l'eau et de la grêle, pour ne pas être perturbé en cas d'ingestion d'eau ou de grêle. Toutefois, une sonde de ce type présente un coût élevé.

Il a également été proposé de concevoir les lois de commande de l'angle d'ouverture des aubes avec une marge suffisante pour éviter un pompage en cas perturbation de la mesure de la température T25. Toutefois, la faisabilité d'une telle solution implique d'autres compromis techniques.

Par ailleurs, il est connu de détecter l'ingestion d'eau ou de grêle dans une turbomachine et d'adapter le fonctionnement de la turbomachine dans ce cas. Par exemple, le document FR 2 681 377 propose de détecter une ingestion d'eau en fonction d'une différence entre la température de l'air à l'entrée du compresseur (désignée T2 dans ce document) et à la sortie du compresseur T3. En cas d'ingestion d'eau, le régime de la turbomachine est augmenté.

### Objet et résumé de l'invention

L'invention a pour but de fournir un procédé de commande d'une turbomachine, qui ne présente pas au moins certains des inconvénients précités. En particulier, un but de l'invention est de permettre l'utilisation d'un capteur de température ne nécessitant pas un séparateur inertiel.

A cet effet, l'invention propose un procédé de commande d'une turbomachine comprenant :
- une étape de mesure d'une première température par un premier capteur de température,
- une étape de mesure d'une deuxième température par un deuxième capteur de température,
- une étape d'estimation d'une troisième température modélisant ladite première température,
- une étape de détermination d'au moins une consigne de commande pour au moins un équipement à géométrie variable de la turbomachine, en fonction de ladite première température mesurée,
   caractérisé en ce que ledit premier capteur présente une constante de temps C1 supérieure à une constante de temps C2 du deuxième capteur, le procédé comprenant :
- une étape de détection d'une ingestion d'eau ou de grêle en fonction d'une chute de ladite deuxième température mesurée, et
- lorsqu'une ingestion d'eau ou de grêle est détectée, une étape de détermination de ladite consigne de commande en fonction de ladite troisième température estimée.

En cas d'ingestion d'eau ou de grêle par la turbomachine, la première température et la deuxième température, mesurées par les capteurs, chutent. Plus précisément, la chute de la deuxième température est plus rapide que celle de la première température car le deuxième capteur présente une constante de temps plus faible.

La chute plus rapide de la deuxième température permet de détecter l'ingestion d'eau ou de grêle avant que la première température n'ait chuté suffisamment pour perturber la détermination de la consigne de commande. Il est ensuite possible, en réponse à la détection de l'ingestion d'eau ou de grêle, de déterminer la consigne de commande en fonction de la troisième température, c'est-à-dire d'utiliser le modèle de la première température à la place de la première température elle-même, pour éviter que la poursuite de la chute de la première température ne perturbe la détermination de la consigne de commande.

Ainsi, l'invention permet l'utilisation d'un premier capteur de température qui peut présenter une constante de temps relativement élevée. Le premier capteur peut donc présenter une structure simple, ne nécessitant pas de séparateur inertiel, et peut présenter un coût réduit. Par ailleurs, la loi de commande permettant la détermination de la consigne de commande ne doit pas tenir compte d'une marge de sécurité pour prendre en compte des chutes de la première température en cas d'ingestion d'eau.

Dans un mode de réalisation, plusieurs consignes pour plusieurs équipements sont déterminées.

La première température peut être une température T25 à l'entrée d'un compresseur de la turbomachine et la deuxième température peut être une température T3 à la sortie dudit compresseur.

Selon un mode de réalisation, ledit premier capteur de température ne présente pas de séparateur inertiel.

La consigne de commande est par exemple une consigne d'angle pour un ensemble d'aubes fixes à angle de calage variable dudit compresseur.

Selon un mode de réalisation, lorsqu'aucune ingestion d'eau ou de grêle n'est détectée, l'étape de détermination comprend la détermination de ladite consigne de commande en utilisant une première loi de commande et, lorsqu'une ingestion d'eau ou de grêle est détectée, l'étape de détermination comprend la détermination de ladite consigne de commande en utilisant une deuxième loi de commande différente de la première, et dans lequel, pour une température d'entrée donnée, la deuxième loi de commande fournit une consigne d'angle plus fermée que la première loi de commande.

Corrélativement, l'invention propose également un programme d'ordinateur comprenant des instructions pour l'exécution d'un procédé selon l'invention décrit précédemment lorsque le programme est exécuté par un ordinateur. L'invention propose également une unité électronique pour la commande d'une turbomachine, ladite unité électronique comprenant une mémoire contenant un tel programme d'ordinateur.

### Brève description des dessins

L'invention sera mieux comprise à la lecture de la description faite ci-après, à titre indicatif mais non limitatif, en référence aux dessins annexés sur lesquels :
- la figure 1 est une vue en perspective d'une turbomachine ;
- la figure 2 représente une unité électronique de commande selon un mode de réalisation de l'invention ; et
- la figure 3 représente des moyens de commande permettant la mise en oeuvre d'un procédé selon un mode de réalisation de l'invention.

### Description détaillée de modes de réalisation

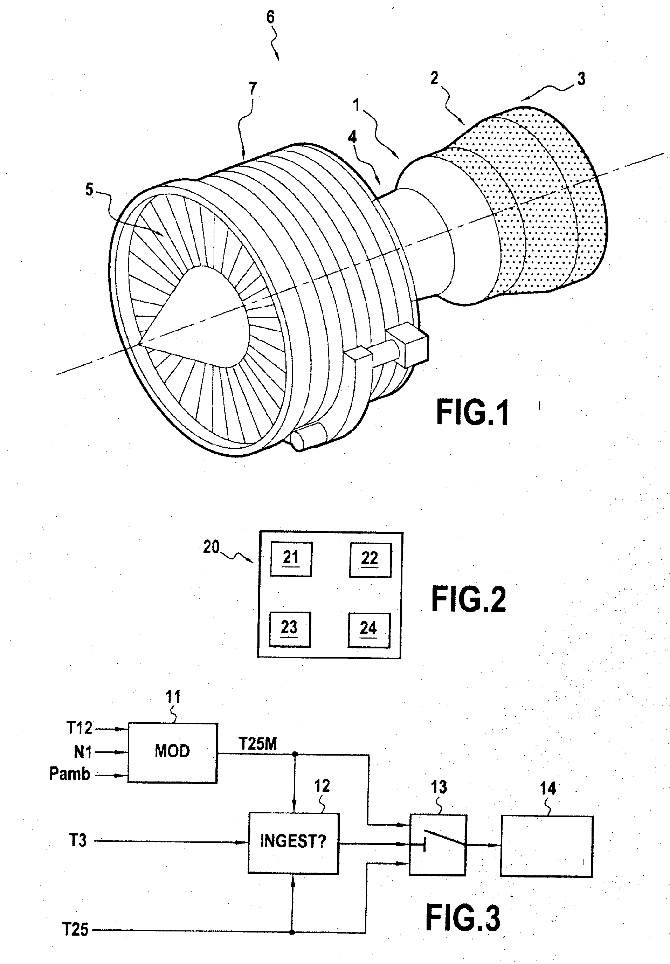

L'invention sera principalement décrite ci-après dans le cadre de son application à une turbomachine de moteur de propulsion pour avion telle que par exemple celle montrée de façon très simplifiée sur la figure 1. L'invention est toutefois applicable à d'autres turbomachines, notamment des turbines d'hélicoptères, des turbines industrielles ou des turbines de groupes auxiliaires de puissance (APU).

La turbomachine 6 de la figure 1 comprend une chambre de combustion 1, les gaz de combustion issus de la chambre 1 entraînant une turbine haute pression (HP) 2 et une turbine basse pression (BP) 3. La turbine HP 2 est couplée par un arbre à un compresseur HP 4 alimentant la chambre de combustion 1 en air sous pression tandis que la turbine BP 3 est couplée par un autre arbre à un compresseur BP 7 et une soufflante 5 en entrée du moteur.

Le fonctionnement de la turbomachine 6 est commandé par une unité électronique de commande 20, représentée sur la figure 2, qui met en oeuvre une boucle de régulation principale pour asservir une combinaison de mesures réalisées sur le moteur à une consigne fonction de la poussé souhaitée, par action sur le débit de carburant amené à la chambre de combustion 1. L'unité électronique de commande met également en oeuvre des boucles de régulation secondaires pour des équipements à géométrie variable de la turbomachine.

A cet effet, l'unité électronique de commande 20 acquiert des signaux représentatifs de différents paramètres de fonctionnement mesurés, notamment :
- la température T25 en entrée du compresseur HP 4,
- la température T3 en sortie du compresseur HP 4,
- la température T12 en entrée de la soufflante 5,
- la pression environnante Pamb,
- la vitesse de rotation N1 du compresseur BP 7 et de la turbine BP 3.

L'unité électronique de commande 20 présente l'architecture matérielle d'un ordinateur et comprend un microprocesseur 21, une mémoire morte 22, une mémoire vive 23 et une interface 24. En fonctionnement, le microprocesseur 21 exécute des programmes d'ordinateur mémorisés dans la mémoire morte 22 en utilisant la mémoire vive 23. L'interface 24 permet à l'unité électronique de commande 20 d'acquérir les différents signaux précités, et d'envoyer des signaux représentatifs des consignes de commande déterminées.

Les températures T25 et T3 sont mesurées par des capteurs de température. Les capteurs de température souffrent généralement, lors d'une mesure, d'une certaine inertie, propre à chaque capteur, et qui dépend notamment du matériau et de la masse (ou de la taille) de ce capteur. Cette inertie se traduit par un décalage temporel entre le moment où la mesure est réalisée par le capteur et le moment où celui-ci délivre un signal en réponse à cette mesure. On parle « d'effet de trainage » de la mesure.

De manière connue, l'inertie d'un capteur peut être représentée par une constante de temps. Par exemple, le document US 5,080,496 propose une modélisation numérique de l'inertie d'un capteur à l'aide d'un filtre paramétré par une estimation de la constante de temps de ce capteur.

La température T25 est mesurée par un capteur de température présentant une constante de temps C1 et la température T3 est mesurée par un capteur de température présentant une constante de temps C2 inférieure à C1.

Par exemple, les valeurs maximales acceptables pour la constante de temps C1 de la température T25 sont :
- 60 secondes pour un flux d'air de 20 Kg/(s m²),
- 34.2 secondes pour un flux d'air de 50 Kg/(s m²),
- 18 secondes pour un flux d'air de 350 Kg/(s m²).
   alors que les valeurs maximales acceptables pour la constante de temps C2 de la température T3 sont :
- 4 secondes pour un flux d'air de 20 Kg/(s m²),
- 1 seconde pour un flux d'air de 50 Kg/(s m²),
- 0,8 seconde pour un flux d'air de 350 Kg/(s m²).

L'homme du métier peut noter que les valeurs mentionnées ci-dessus pour la constante de temps C1 sont sensiblement supérieures aux valeurs usuelles de l'art antérieur.

Par ailleurs, l'unité électronique de commande 20 peut estimer la valeur de certains paramètres en utilisant des modèles. Par exemple, la température T25 peut être estimée par un modèle de température T25M. Des modèles de température T25M sont connus de l'homme du métier et il n'est pas nécessaire d'en donner une description détaillée. Par exemple, la température T25M peut être déterminée en fonction de la température T12, de la vitesse de rotation N1 et de la pression Pamb.

Comme expliqué précédemment, une ingestion d'eau ou de grêle peut perturber le fonctionnement de la turbomachine 6. Ainsi, l'unité électronique de commande 20 met en oeuvre un procédé de détection d'ingestion d'eau ou de grêle et adapte le fonctionnement de la turbomachine 6 lorsqu'une ingestion est détectée. Plusieurs procédés de détection de l'ingestion d'eau ou de grêle sont connus de l'homme du métier et il n'est pas nécessaire d'en donner une description détaillée. Par exemple, une ingestion peut être détectée à partir d'une chute de la température T3.

La figure 3 représente schématiquement des moyens de commande permettant de commander le fonctionnement de la turbomachine 6. Les moyens de commande de la figure 3 sont par exemple mis en oeuvre sous la forme d'un programme d'ordinateur exécuté par l'unité électronique de commande 20.

La figure 3 représente un module de modélisation 11, un module de détection 12, un sélecteur 13 et un module de détermination 14.

Le module de modélisation 11 met un oeuvre un modèle de la température T25 et détermine la température T25M, par exemple en fonction de la température T12, de la vitesse de rotation N1 et de la pression Pamb.

Le module de détection 12 permet de détecter une ingestion d'eau ou de grêle, en fonction des températures T3, T25 et T25M. Plus précisément, une chute de la température T3 permet de détecter une ingestion. D'autres paramètres peuvent également être utilisés.

Le sélecteur 13 reçoit en entrée les températures T25 et T25M, ainsi que le signal de sortie du module de détection 12. Lorsque le module de détection 12 n'indique aucune ingestion, le sélecteur 13 fournit en sortie le signal de température T25. Lorsque le module de détection 12 indique une ingestion, le sélecteur 13 fournit en sortie le signal de température T25M.

Le module de détermination 14 détermine une consigne de commande pour un des équipements à géométrie variable de la turbomachine 6, en fonction d'une valeur d'entrée fournie par le sélecteur 13. Autrement dit, en l'absence d'ingestion, la consigne de commande est déterminée en fonction de la température T25 et en cas d'ingestion, la température T25M est utilisée à la place de la température T25. Bien entendu, le module de détermination 14 peut également utiliser d'autres paramètres pour déterminer la consigne de commande.

Le fonctionnement des moyens de commande de la figure 3 est le suivant.

En l'absence d'ingestion d'eau ou de grêle, le sélecteur 13 fournit la température T25 au module de détermination 14.

En cas d'ingestion d'eau ou de grêle par la turbomachine, la température T25 et la température T3 mesurées par les capteurs chutent. Plus précisément, la chute de la température T3 est plus rapide que celle de la température T25 car le capteur de la température T3 présente une constante de temps C2 plus faible que la constante de temps C1 du capteur de la température T25. Par contre, la température T25M ne chute pas, ou du moins chute de manière moins marquée que la température T25, car elle est déterminée en fonction de paramètres qui ne sont pas sensiblement perturbés par l'ingestion.

La chute plus rapide de la température T3 permet au module de détection 12 de détecter l'ingestion d'eau ou de grêle avant que la température T25 n'ait chuté suffisamment pour perturber la détermination de la consigne de commande par le module de détermination 14.

En réponse à la détection de l'ingestion d'eau ou de grêle, le sélecteur 13 bascule et fournit donc la température T25M au module de détermination 14. Le module de détermination 14 utilise alors la température T25M à la place de la température T25 pour déterminer la consigne de commande. Ainsi, la poursuite de la chute de la température T25 ne perturbe pas la détermination de la consigne de commande.

Ainsi, comme le capteur mesurant la température T25 présente une constante de temps C1 relativement élevée, la température T25 mesurée ne chute pas rapidement en cas d'ingestion d'eau et peut être encore utilisée temporairement pour déterminer une consigne de commande avant la détection de l'ingestion. Ce capteur peut donc présenter une structure simple, ne nécessitant pas de séparateur inertiel, et peut présenter un coût réduit.

Le module de détermination 14 détermine par exemple une consigne d'angle pour des aubes fixes à angle de calage variable du compresseur HP 4, une ouverture de vanne de décharge et/ou une augmentation de la consigne liée à la poussée. Grâce à la constante de temps C1 relativement élevée et au sélecteur 13, le signal d'entrée fourni au module dé détermination 14 ne chute pas sensiblement en cas d'ingestion d'eau ou de grêle. Ainsi, le module de détermination 14 ne doit pas tenir compte d'une marge de sécurité pour prendre en compte des chutes de la mesure de la température T25 en cas d'ingestion d'eau ou de grêle.

Selon une variante non représentée, le module de détermination 14 reçoit en entrée, en plus du signal de sortie du sélecteur 13, le signal de sortie du module de détection 12, et le module de détermination 14 utilise une première loi de commande pour déterminer la consigne de commande en absence d'ingestion d'eau, et une deuxième loi de commande différente de la première en cas d'ingestion d'eau. Pour une température d'entrée donnée, la deuxième loi de commande fournit une consigne d'angle plus fermée que la première loi de commande.

Ainsi, selon cette variante, une sur-fermeture est provoquée en cas d'ingestion, pour compenser le risque de pompage plus élevé dans ce cas.

L'invention a été décrite précédemment en référence à un mode de réalisation concernant les températures T25 et T3. En variante, l'invention peut concerner deux autres températures mesurées à des endroits distincts de la turbomachine.

## Revendications

1. Procédé de commande d'une turbomachine (6) comprenant :
- une étape de mesure d'une première température (T25) par un premier capteur de température,
- une étape de mesure d'une deuxième température (T3) par un deuxième capteur de température,
- une étape d'estimation d'une troisième température (T25M) modélisant ladite première température,
- une étape de détermination d'au moins une consigne de commande pour au moins un équipement à géométrie variable de la turbomachine, en fonction de ladite première température mesurée,
**caractérisé en ce que** ledit premier capteur présente une constante de temps C1 supérieure à une constante de temps C2 du deuxième capteur, le procédé comprenant :
- une étape de détection d'une ingestion d'eau ou de grêle en fonction d'une chute de ladite deuxième température mesurée, et
- lorsqu'une ingestion d'eau ou de grêle est détectée, une étape de détermination de ladite consigne de commande en fonction de ladite troisième température estimée.

2. Procédé de commande selon la revendication 1, dans lequel la première température est une température T25 à l'entrée d'un compresseur (4) de la turbomachine et la deuxième température peut être une température T3 à la sortie dudit compresseur.

3. Procédé de commande selon la revendication précédente, dans lequel ledit premier capteur de température ne présente pas de séparateur inertiel.

4. Procédé de commande selon l'une des revendications 2 et 3, dans lequel ladite consigne de commande est une consigne d'angle pour un ensemble d'aubes fixes à angle de calage variable dudit compresseur.

5. Procédé de commande selon la revendication 4, dans lequel, lorsqu'aucune ingestion d'eau ou de grêle n'est détectée, l'étape de détermination comprend la détermination de ladite consigne de commande en utilisant une première loi de commande et, lorsqu'une ingestion d'eau ou de grêle est détectée, l'étape de détermination comprend la détermination de ladite consigne de commande en utilisant une deuxième loi de commande différente de la première, et dans lequel, pour une température d'entrée donnée, la deuxième loi de commande fournit une consigne d'angle plus fermée que la première loi de commande.

6. Programme d'ordinateur comprenant des instructions pour l'exécution d'un procédé selon l'une des revendications 1 à 5 lorsque le programme est exécuté par un ordinateur.

7. Unité électronique (20) pour la commande d'une turbomachine, ladite unité électronique comprenant une mémoire (22) contenant un programme d'ordinateur selon la revendication 6.

## Patentansprüche

1. Verfahren zur Steuerung einer Turbomaschine (6), umfassend:
- einen Schritt zur Messung einer ersten Temperatur (T25) durch einen ersten Temperaturfühler,
- einen Schritt zur Messung einer zweiten Temperatur (T3) durch einen zweiten Temperaturfühler,
- einen Schritt zur Schätzung einer dritten Temperatur (T25M), welche die erste Temperatur modelliert,
- einen Schritt zur Bestimmung wenigstens eines Steuersollwertes für wenigstens eine Einrichtung mit variabler Geometrie der Turbomaschine, in Abhängigkeit von der gemessenen ersten Temperatur,
**dadurch gekennzeichnet, dass** der erste Fühler eine Zeitkonstante C1, die größer als eine Zeitkonstante C2 des zweiten Fühlers ist, aufweist, wobei das Verfahren umfasst:
- einen Schritt zur Erfassung einer Aufnahme von Wasser oder Hagel in Abhängigkeit von einem Abfall der gemessenen zweiten Temperatur und,
- wenn eine Aufnahme von Wasser oder Hagel erfasst wird, einen Schritt zur Bestimmung des Steuersollwertes in Abhängigkeit von der geschätzten dritten Temperatur.

2. Steuerungsverfahren nach Anspruch 1, wobei die erste Temperatur eine Temperatur T25 am Eingang eines Verdichters (4) der Turbomaschine ist und die zweite Temperatur eine Temperatur T3 am Ausgang des Verdichters sein kann.

3. Steuerungsverfahren nach dem vorhergehenden Anspruch, wobei der erste Temperaturfühler kein Trägheitstrennglied aufweist.

4. Steuerungsverfahren nach einem der Ansprüche 2 und 3, wobei der Steuersollwert ein Winkelsollwert für eine Anordnung von Leitschaufeln mit variablem Anstellwinkel des Verdichters ist.

5. Steuerungsverfahren nach Anspruch 4, wobei dann, wenn keinerlei Aufnahme von Wasser oder Hagel erfasst wird, der Bestimmungsschritt die Bestimmung des Steuersollwertes unter Verwendung eines ersten Steuerungsgesetzes umfasst, und dann, wenn eine Aufnahme von Wasser oder Hagel erfasst wird, der Bestimmungsschritt die Bestimmung des Steuersollwertes unter Verwendung eines von dem ersten verschiedenen zweiten Steuerungsgesetzes umfasst, und wobei bei einer gegebenen Eingangstemperatur das zweite Steuerungsgesetz einen geschlosseneren Winkelsollwert als das erste Steuerungsgesetz liefert.

6. Computerprogramm, umfassend Befehle für die Durchführung eines Verfahrens nach einem der Ansprüche 1 bis 5, wenn das Programm durch einen Computer ausgeführt wird.

7. Elektronische Einheit (20) für die Steuerung einer Turbomaschine, wobei die elektronische Einheit einen Speicher (22) umfasst, der ein Computerprogramm nach Anspruch 6 enthält.

## Claims

1. A method of controlling a turbine engine (6) comprising:
- a step of measuring a first temperature (T25) by a first temperature sensor;
- a step of measuring a second temperature (T3) by a second temperature sensor;
- a step of estimating a third temperature (T25M) modeling said first temperature;
- a step of determining at least one control setpoint for at least one piece of variable-geometry equipment of the turbine engine, as a function of said measured first temperature;
the method being **characterized in that** said first sensor presents a time constant C1 longer than a time constant C2 of the second sensor, and the method further comprising:
a step of detecting ingestion of water or hail as a function of a drop in said measured second temperature; and
· when water or hail ingestion is detected, a step of determining said control setpoint as a function of said estimated third temperature.

2. A control method according to claim 1, wherein the first temperature is a temperature T25 at the inlet of a compressor (4) of the turbine engine and the second temperature may be a temperature T3 at the outlet from said compressor.

3. A control method according to the preceding claim, wherein said first temperature sensor does not present an inertial separator.

4. A control method according to claim 2 or claim 3, wherein said control setpoint is an angle setpoint for a set of variable-pitch stator vanes of said compressor.

5. A control method according to claim 4, wherein, when no water or hail ingestion is detected, the determination step comprises determining said control setpoint while using a first control relationship, and when water or hail ingestion is detected, the determination step comprises determining said control setpoint while using a second control relationship that is different from the first, and wherein for a given input temperature, the second control relationship delivers an angle setpoint that is more closed than does the first control relationship.

6. A computer program including instructions for executing a method according to any one of claims 1 to 5 when the program is executed by a computer.

7. An electronic unit (20) for controlling a turbine engine, said electronic unit having a memory (22) containing a computer program according to claim 6.
